# EUROPEAN PATENT APPLICATION

(11) **EP 4 508 989 A1**
(43) Date of publication of application: **19.02.2025**
(21) Application number: 23788323.6
(22) Date of filing: 11.04.2023
(51) Int. Cl.: A23L 29/256, A23J 3/00, A23L 15/00, A23L 29/10, A23L 29/281, A23L 35/00

(54) **PREMIX OF COAGULATED EGG-LIKE GELATINIZED PRODUCT, METHOD FOR PRODUCING COAGULATED EGG-LIKE GELATINIZED PRODUCT, COAGULATED EGG-LIKE GELATINIZED PRODUCT, AND FOOD**

(30) Priority: 12.04.2022 JP 2022065738
(71) Applicant: Kewpie Corporation, Tokyo 150-0002 (JP); Kewpie EGG Corporation, Chofu-shi, Tokyo 182-0002 (JP)
(72) Inventor: WATANABE, Masanori, Chofu-shi, Tokyo 182-0002 (JP)
(74) Representative: Plasseraud IP
(86) International application number: PCT/JP2023/014659
(87) International publication number: WO 2023/199905

(57) **Abstract**

Provided are a base material for a coagulated egg-like gelatinized product capable of easily reproducing a texture and flavor of coagulated egg, a coagulated egg-like gelatinized product using the base material, and a method for producing the coagulated egg-like gelatinized product and a food product containing the coagulated egg-like gelatinized product. The base material for the coagulated egg-like gelatinized product of the present invention contains an alginate, an edible fat or oil, and a glucide, and is in a liquid state. In the base material for the coagulated egg-like gelatinized product of the present invention, a content of the edible fat or oil is 10 mass% or more and 23 mass% or less, and a content of the glucide is 3 mass% or more and 13 mass% or less.

## Description

### [Technical Field]

The present invention relates to a base material for a coagulated egg-like gelatinized product capable of producing a coagulated egg-like gelatinized product, a method for producing a coagulated egg-like gelatinized product using the base material, a coagulated egg-like gelatinized product, and a food product containing the coagulated egg-like gelatinized product.

### [Background Art]

The coagulated egg obtained by coagulating beaten egg is characterized by a soft and moderately elastic texture unique to an egg and by a rich and slightly sweet flavor, and is used for various cooked products such as a scrambled egg soup, rice bowls, scrambled eggs, omelets, and stir fries. On the other hand, for cooking coagulated egg from liquid egg, in order to coagulate (gel) the egg protein, heating by hot water, baking, or the like is required, and it has not been possible to easily make coagulated egg anywhere.

On the other hand, a technique for producing a substitute for coagulated egg without gelation of egg protein having heat coagulability is known. For example, PTL 1 describes a method for producing a heated and beaten egg-like food product characterized in that a polysaccharide is added to a soybean protein solution heated in the presence of an alkaline earth metal to form a solution or a dispersion liquid, and the solution or the dispersion liquid is frozen. In addition, for example, PTL 2 describes a method for producing coagulated egg white-like food product material by gelatinizing curdlan suspended in water, adding an emulsifier and an edible fat or oil, stirring the mixture, adding an alginate and a slow-acting calcium salt to the swollen gelatinized curdlan to which the edible fat or oil has been added, filling and molding the mixture, and solidifying the mixture.

### [Citation List]

### [Patent Literature]

[PTL 1] Japanese Patent Application Publication No. H09-266758
[PTL 2] Japanese Patent No. 4865687

### [Summary of Invention]

### [Technical Problem]

However, since the food product described in PTL 1 is a frozen product, heating or thawing over a long time is required. In addition, the food product is mainly composed of soybean protein frozen and structured by reacting with alkaline earth metal such as calcium ions, and does not sufficiently have the softness, elasticity, and flavor characteristic to coagulated egg. The food product material described in PTL 2 is hard gelatinized like albumen of a boiled egg, and does not reproduce the texture and flavor of coagulated egg obtained by coagulating beaten egg.

As described above, in the conventional technique, it is not possible to sufficiently meet the demand for a convenient way to enjoy the texture and flavor of the coagulated egg obtained by coagulating beaten egg.

With the foregoing in view, it is an object of the present invention to provide a base material for a coagulated egg-like gelatinized product capable of easily reproducing the texture and flavor of coagulated egg, a method for producing a coagulated egg-like gelatinized product using the base material, a coagulated egg-like gelatinized product, and a food product containing the coagulated egg-like gelatinized product.

### [Solution to Problem]

In order to achieve the above object, the present inventor has intensively studied the base material for the coagulated egg-like gelatinized product. As a result, the present inventors have found a base material for the coagulated egg-like gelatinized product which has a good balance of softness and elasticity, can reproduce an egg-like flavor, and can be easily handled by using an alginate, an edible fat or oil, and glucide and setting the content of the edible fat or oil and glucide within a predetermined range, and have completed the present invention.

That is, the present invention relates to:
(1) A base material for a coagulated egg-like gelatinized product, the base material containing an alginate, an edible fat or oil, and a glucide, wherein
   a content of the edible fat or oil is 10 mass% or more and 23 mass% or less, and
   a content of the glucide is 3 mass% or more and 13 mass% or less;
(2) The base material for the coagulated egg-like gelatinized product according to (1), further containing a protein;
(3) The base material for the coagulated egg-like gelatinized product according to (2), wherein the protein includes a plant protein;
(4) The base material for the coagulated egg-like gelatinized product according to any one of (1) to (3),further containing an emulsifier;
(5) The base material for the coagulated egg-like gelatinized product according to (4), wherein the emulsifier contains at least one of a hydrophilic emulsifier having an HLB value of 10 or more or a lysophospholipid;
(6) The base material for the coagulated egg-like gelatinized product according to any one of (1) to (5), further containing common salt, wherein
   a common salt concentration in water is 0.5 mass% or more and 5 mass% or less;
(7) A method for producing a coagulated egg-like gelatinized product, the method including
   adding a base material for the coagulated egg-like gelatinized product according to any one of (1) to (6) to a calcium solution;
(8) A coagulated egg-like gelatinized product containing a calcium alginate, an edible fat or oil, and a glucide, wherein
   a content of the edible fat or oil is 10 mass% or more and 23 mass% or less, and
   a content of the glucide is 3 mass% or more and 13 mass% or less;
(9) A food product containing the coagulated egg-like gelatinized product according to (8); and
(10) The food product according to (9), wherein the food product is like a scrambled egg soup.

### [Advantageous Effects of Invention]

According to the present invention, it is possible to provide a base material for a coagulated egg-like gelatinized product capable of easily reproducing the texture and flavor of coagulated egg, a method for producing a coagulated egg-like gelatinized product using the base material, a coagulated egg-like gelatinized product, and a food product containing the coagulated egg-like gelatinized product.

### [Description of Embodiments]

Hereinafter, the present invention will be described in detail. In the present invention, "%" means "mass%". In the present invention, the "content" of a certain component means the proportion by mass of the component when the mass of all base materials for the coagulated egg-like gelatinized product is 100 mass%.

### <Base Material for Coagulated Egg-like Gelatinized Product>

A base material for a coagulated egg-like gelatinized product of the present invention is a liquid base material allowing a coagulated egg-like gelatinized product to be obtained. When the base material for the gelatinized product of the present invention is added to a calcium solution containing calcium ions, it is possible to easily prepare a coagulated egg-like gelatinized product and to reproduce the texture and flavor characteristic to coagulated egg.

Hereinafter, the base material for the coagulated egg-like gelatinized product is also referred to as "base material for gelatinized product".

The base material for the gelatinized product of the present invention may be a refrigerated product stored at 0°C or higher and 10°C or lower, or a frozen product stored at - 15°C or lower.

The base material for the gelatinized product of the present invention preferably does not contain eggs or contains a small amount of eggs, and more preferably does not contain eggs. "Not containing egg" means that raw materials derived from an avian egg generally provided for food, such as a chicken, quail, and duck egg, are not contained, and "containing a small amount of egg" means that raw materials derived from an avian egg are contained in an amount of 5% or less, preferably 3% or less, and more preferably 1% or less in the gelatinized product.

### <Coagulated Egg>

In the present invention, the coagulated egg refers to a heated coagulated product of beaten egg. In addition, the beaten egg referred to herein refers to one obtained by stirring liquid egg white and/or liquid egg yolk obtained by crack an egg.

Such coagulated egg is generally prepared by pouring liquid egg into hot water or soup, or by thinly firing the liquid egg. Since such coagulated egg has an airy and moderately elastic texture and a rich and slightly sweet flavor characteristic to an egg, the coagulated egg is used as a topping for various dishes in addition to an egg cooked product mainly containing an egg.

### <Coagulated Egg-like Gelatinized Product>

The coagulated egg-like gelatinized product of the present invention is a gelatinized product imitating coagulated egg, and is prepared using the base material for the gelatinized product of the present invention. The shape of the coagulated egg-like gelatinized product prepared from the base material for the gelatinized product of the present invention can be, for example, various shapes such as a membrane-like shape, a rod shape, a scale shape, a flat shape, and a granular shape (a minced form), and it is preferable that the coagulated egg-like gelatinized product has, for example, a membrane-like. The thickness of the membrane-like coagulated egg-like gelatinized product is preferably, for example, 5 mm or less, and more preferably 3 mm or less. The thickness of the coagulated egg-like gelatinized product of the present invention is measured visually in a state in which the liquid is removed and spread as necessary.

### <Alginate>

The base material for the gelatinized product of the present invention contains an alginate from the viewpoint of reproducing an elastic texture equivalent to or close to that of a real coagulated egg.

The alginate of the present invention refers to a salt in which hydrogen of a carboxyl group in alginic acid is substituted by an ion. The alginate used in the present invention is preferably a monovalent cation salt, and is preferably, for example, one or more selected from sodium alginate, potassium alginate, and ammonium alginate. Among them, the alginate used in the present invention is more preferably sodium alginate from the viewpoint of handling and availability.

The alginate reacts with calcium ions to be ionically crosslinked. Water is transferred to and retained in the gel network constructed by the ion crosslinking, whereby an elastic gelatinized product is generated. In the present invention, thermal coagulation of liquid egg can be reproduced using such a reaction of gelation by an alginate and calcium ions.

On the other hand, depending on the amount of calcium ions to be reacted and the reaction time, the gel network formed of alginate may retain too much water, so that a hard texture is obtained. In addition, as described later, in a case where the calcium solution is a soup or a seasoning liquid that forms a part of a cooked product, alginate and calcium ions react for a long time, and thus a particularly hard texture is likely to be obtained.

Therefore, in the present invention, by adding a predetermined amount of the edible fat or oil and glucide to the base material for the gelatinized product, water transfer to the gel network by alginate is alleviated, and a texture close to that of coagulated egg is realized. Furthermore, since alginates have a slightly fishy flavor, it is also possible to impart a fishy smell like egg to the gelatinized product.

In the base material for the gelatinized product of the present invention, the lower limit value of the content of alginate is preferably 0.3% or more and more preferably 0.5% or more from the viewpoint of imparting elasticity to the coagulated egg-like gelatinized product. In addition, the upper limit value of the content is preferably 2.0% or less, and more preferably 1.0% or less, from the viewpoint of curbing the coagulated egg-like gelatinized product having a hard texture.

### <Edible Fat or Oil>

The base material for the gelatinized product of the present invention contains 10% or more and 23% or less of the edible fat or oil.

When the base material for the gelatinized product of the present invention contains an edible fat or oil having such a content, the edible fat or oil moderately suppresses water transfer to the gel network due to the alginate, and the coagulated egg-like gelatinized product having a soft texture like coagulated egg can be obtained. Furthermore, the edible fat or oil having the above content allow the richness and mouthfeel of egg to be reproduced, and can impart an egg like flavor to the coagulated egg-like gelatinized product.

Furthermore, due to the edible fat or oil having the above content, the specific gravity of the coagulated egg-like gelatinized product is reduced, and the coagulated egg-like gelatinized product easily floats on soup or ingredients of a cooked product. This can improve the appearance of the cooked product.

In order to more effectively obtain the above-mentioned action and effect, the lower limit value of the content of the edible fat or oil of the present invention is more preferably 15% or more, and the upper limit value is more preferably 22% or less.

Examples of the edible fat or oil in the present invention include animal and vegetable oils and purified oils thereof, and edible fat or oil obtained by subjecting fats or oils to a chemical or enzymatic treatment. Examples of the animal and vegetable oils include rapeseed oil, corn oil, cottonseed oil, soybean oil, safflower oil, olive oil, safflower oil, sunflower oil, perilla oil, linseed oil, palm oil, milk fat, beef tallow, lard, and egg yolk oil. Examples of the edible fat or oil obtained by the chemical or enzymatic treatment include medium-chain fatty acid triglycerides (MCT), diglycerides, hardened oils, and enzyme-treated egg yolk oil.

These edible fats and oils may be used singly or in combination of two or more kinds thereof.

In particular, the edible fat or oil preferably contains vegetable fat or oil from the viewpoint of meeting the needs for vegetable food products, and for example, preferably contains rapeseed oil, corn oil, soybean oil, safflower oil, olive oil, safflower oil, sunflower oil, perilla oil, linseed oil, and the like. In addition, the edible fat or oil may contain, for example, a fat or oil containing an omega-3 fatty acid such as perilla oil or linseed oil from the viewpoint of meeting the needs for health consciousness.

### <Glucide>

The base material for the gelatinized product of the present invention contains 3% or more and 13% or less of a glucide.

In the present invention, glucides refer to carbohydrates excluding dietary fiber. When the base material for the gelatinized product contains the glucide having the above content, the water retention action of the glucide can curb water transfer to the gel network due to the alginate. As a result, the gel by alginate becomes soft, and the gel by alginate and the water retained in the glucide are mixed, so that the coagulated egg-like gelatinized product having a moist and soft texture can be obtained. In addition, it is also possible to impart an appropriate sweet flavor to the coagulated egg-like gelatinized product by the glucide having the above content.

In the present invention, the lower limit value of the content of the glucide is more preferably 5% or more and the upper limit value of the content is more preferably 10% or less in order to more effectively obtain the above-described action and effect.

Examples of the glucide in the present invention include monosaccharides, oligosaccharides, polysaccharides, and sugar alcohols.

Examples of the monosaccharides include glucose and fructose.

The oligosaccharide refers to a saccharide in which a monosaccharide is bonded to about a disaccharide to a decasaccharide, and examples thereof include disaccharides such as sucrose, which are main components of sugar, lactose, trehalose, and maltose, trisaccharides such as raffinose, panose, maltotriose, and melezitose, and cyclodextrins in which several glucose molecules are cyclically bonded.

Examples of the polysaccharide include starches and dextrins.

Examples of the sugar alcohol include reduced starch saccharified product, reduced starch syrup, aspartame, erythritol, xylitol, sorbitol, palatinose, and the like.

These glucides may be used singly or in combination of two or more kinds thereof.

Among them, the glucide of the present invention preferably contains at least one of an oligosaccharide or a sugar alcohol. The oligosaccharides have a good balance between the action of absorbing water and the action of retaining water, and are suitable for controlling water transfer to the gel network. The sugar alcohol can stabilize the quality of the base material for the gelatinized product. In particular, the glucide of the present invention more preferably contains a decasaccharide or lower sugar alcohol having the above-described advantages of an oligosaccharide and a sugar alcohol.

### <Protein>

The base material for the gelatinized product of the present invention preferably further contains a protein.

When the base material for the gelatinized product of the present invention contains a protein, a coagulated egg-like gelatinized product having a rich flavor close to an egg containing a large amount of protein can be obtained by the protein.

From the viewpoint of effectively obtaining the above action and effect, the lower limit of the protein content in the present invention is preferably 0.01% or more, and more preferably 0.05% or more. The upper limit value of the content is preferably 3% or less, more preferably 1% or less, and still more preferably 0.3% or less.

The protein in the present invention is not particularly limited, and may include an animal protein such as an albumen protein or a milk protein, or may include a plant protein. From the viewpoint of meeting the needs for plant food products, the protein in the present invention preferably contains a plant protein. Examples of the plant protein include soybean protein, wheat protein, oat protein, rice protein, and proteins extracted from seeds (nuts).

These proteins may be used singly or in combination of two or more kinds thereof.

### <Plant-based Milk>

The base material for the gelatinized product of the present invention preferably contains plant-based milk, and the protein preferably contains a plant protein derived from the plant-based milk.

The plant-based milk of the present invention refers to a cloudy emulsion containing a plant material as a raw material. The plant-based milk is not particularly limited, and examples thereof include soy milk, oat milk, almond milk, coconut milk, cashew nut milk, rice milk, hemp milk, pistachio milk, macadamia milk, and the like.

In the plant-based milk, proteins, lipids, and the like in the plant material are emulsified, so that a rich taste close to that of an egg can be obtained, and the same feeling as that of an egg in which a flavor remains in the tongue can be obtained. Therefore, when the base material for the gelatinized product contains plant-based milk, a rich flavor and texture equivalent to or close to those of a real coagulated egg can be obtained although a plant food product is used.

In the present invention, the plant-based milk can be obtained by immersing a plant material as a raw material in water, pulverizing and/or boiling the plant material, and then separating the plant-based milk from a solid. Alternatively, commercially available products generally distributed as beverages or for cooking can be used as the plant-based milk. In this case, the plant-based milk may contain an emulsifier, a flavor, a seasoning, a fat or oil, and the like as long as the effect of the present invention is not impaired, in addition to the plant material to be the main raw material.

Since the plant-based milk of the present invention is preferable to contain, for example, soy milk, because soy milk generally has a small amount of additives and a large amount of distribution.

In the present invention, soy milk refers to an emulsion containing soybean as a raw material. That is, the soy milk of the present invention includes "soy milk", "prepared soy milk", and "soy milk beverage" classified by Japanese Agricultural Standards (JAS standards), and a soy bean processed product (soy milk processed product or the like) obtained by processing soy bean into an emulsified liquid as a raw material, which is not included in these.

### <Emulsifier>

The base material for the gelatinized product of the present invention may further contain an emulsifier. As a result, the emulsifier alleviates gelation by alginate, and a coagulated egg-like gelatinized product having a softer texture can be obtained.

Furthermore, when the base material for the gelatinized product contains an emulsifier, the fat/fatty oil is emulsified and a white cloudy bright color can be obtained. This makes it possible to impart a egg- like color with a yellow coloring agent or the like without using a white coloring agent, and to reduce the amount of coloring agent used.

The emulsifier of the present invention preferably contains a hydrophilic emulsifier. Specifically, the emulsifier of the present invention preferably contains at least one of a lysophospholipid or an emulsifier having an HLB value of 10 or more. By the emulsifying action of such a hydrophilic emulsifier, water transfer to the gel network by alginate can be effectively suppressed, and a coagulated egg-like gelatinized product having a moist and soft texture can be obtained. Furthermore, the hydrophilic emulsifier reduces the surface tension of the base material for the gelatinized product, making it easier to prepare a thin and spreading, preferably film-like coagulated egg-like gelatinized product.

The lysophospholipid refers to a monoacyl glycerophospholipid in which the first or second position of the phospholipid, which is a diacyl glycerophospholipid having a glycero skeleton, is hydrolyzed. The material from which the lysophospholipid is derived is not particularly limited, and examples thereof include animal materials such as egg yolk, plant materials such as soybean, sunflower, rice, and rapeseed, algae, and microorganisms.

The lysophospholipid used in the present invention is preferably a lysophospholipid derived from a plant material from the viewpoint of meeting the needs for plant food products.

In addition, in the present invention, the base material for the gelatinized product may contain a lipid mixture containing a lysophospholipid. Examples of such a lipid mixture include lysolecithin and enzyme-treated fats and oils.

The hydrophilic emulsifier having an HLB value of 10 or more is not particularly limited as long as it is commercially available for food, and examples thereof include sucrose fatty acid ester, polyglycerol fatty acid ester, and glycerol organic acid fatty acid ester.

The content of the emulsifier in the present invention is preferably 0.05% or more and 1% or less from the viewpoint of effectively obtaining the above action and effect.

### <Common Salt>

The base material for the gelatinized product of the present invention may further contain common salt. This makes it possible to impart a salty taste to the coagulated egg-like gelatinized product and to improve the flavor. In addition, the reaction between alginate and calcium ions is alleviated by the presence of sodium ions derived from common salt during the preparation of the coagulated egg-like gelatinized product, and the texture of the coagulated egg-like gelatinized product can be softened.

In the base material for the gelatinized product of the present invention, the concentration of the common salt is expressed as the common salt concentration in water. The common salt concentration in the water refers to the concentration of common salt in the water (combined water blended as raw material and water contained in each raw material) of the base material for the gelatinized product.

In order to more effectively obtain the above-described action and effect, the lower limit value of the common salt concentration in water in the base material for the gelatinized product of the present invention is preferably 0.5% or more, and more preferably 1% or more. In addition, the upper limit value of the common salt concentration is preferably 5% or less and more preferably 3% or less from the viewpoint of natural flavor.

### <Lipid-soluble Coloring Agent>

The base material for the gelatinized product of the present invention preferably contains a lipid-soluble coloring agent in order to obtain a color tone close to that of coagulated egg. By containing the lipid-soluble coloring agent, it is possible to suppress a change in color due to dissolution of the coloring agent when cooking a cooked product containing the coagulated egg-like gelatinized product using the base material for the gelatinized product.

The lipid-soluble coloring agent refers to a component that is soluble in fat and oil and can be colored. The lipid-soluble coloring agent may be in the form of an oil or in the form of a powdery or emulsified emulsion.

Examples of the lipid-soluble coloring agent in the present invention include yellow, orange, or red coloring agents, and specific examples thereof include carotene pigment, paprika oil, palm olein, chili pepper oil, carrot oil, orange oil, turmeric pigment, and the like. These coloring agents may be used singly, or may be used in combination of two or more thereof.

### <Water Content of Base Material for Gelatinized Product>

The water content of the gelatinized product of the present invention is preferably 50% or more and 80% or less since it is used in the same manner as liquid egg without being diluted.

The water content of the base material for the gelatinized product is the total content of water blended as a raw material and water contained in each raw material.

### <Other Raw Material>

The base material for the gelatinized product of the present invention may contain a raw material other than the above as long as the effect of the present invention is not impaired. Examples of such a raw material include
dietary fibers such as pectin, glucomannan, indigestible dextrin, gum arabic, indigestible oligosaccharide, cellulose, hemicellulose, fermented cellulose, chitin, psyllium, and soybean fibers;
seasonings such as soy sauce, pepper, and amino acid;
bacteriostatic agents such as glycine, and sodium acetate;
pH adjusting agents such as organic acids and organic acid salts;
preservatives;
antioxidants;
fragrances; and the like.

### <Method for Producing Base Material for Coagulated Egg-like Gelatinized Product>

In one embodiment, the base material for the gelatinized product of the present invention is prepared by mixing raw materials. The raw materials can be mixed using, for example, a mixer or a stirrer. It is to be noted that the raw materials may be mixed to be entirely homogeneous from the viewpoint of homogenizing the gelatinization properties of the base materials of the gelatinized product. The blending amount of each raw material can be adjusted based on the content of each material in the base material for the gelatinized product after production.

### <Method for Producing Coagulated Egg-like Gelatinized Product>

In the method for producing a coagulated egg-like gelatinized product in the present invention, the base material for the gelatinized product is added to a calcium solution containing calcium ions.

As a result, the alginate and the calcium ion react with each other to generate calcium alginate having a high gelling power, and as this reaction proceeds, the base material for the gelatinized product is gradually gelled. As a result, a coagulated egg-like gelatinized product can be prepared.

The calcium solution is, for example, a liquid obtained by dissolving a calcium salt in a solvent such as water. The calcium solution may be, for example, a soup, a seasoning liquid, or the like which is a part of a cooked product containing coagulated egg-like gelatinized product. Thus, the gelatinized product can be used in the cooking process of the cooked product. Alternatively, the calcium solution may be prepared separately from the cooked product.

The concentration of the calcium salt in the calcium solution is appropriately set depending on the type of the cooked product and the like, and is preferably, for example, 0.1% or more and 4% or less.

In the present invention, the coagulated egg-like gelatinized product can be produced without heating the calcium solution, but the calcium solution may be heated depending on the cooking process of the cooked product.

The coagulated egg-like gelatinized product which is gelatinized in the calcium solution is eaten together with, for example, soup or seasoning liquid which is a calcium solution. Alternatively, the coagulated egg-like gelatinized product may be removed from the calcium solution and used for the cooked product.

By using the base material for the gelatinized product of the present invention, it is possible to reproduce a coagulation process similar to that of liquid egg that is gradually coagulated by heating with hot water or a frying pan, and it is possible to produce the coagulated egg-like gelatinized product to the appearance and texture of coagulated egg.

Furthermore, since the coagulated egg-like gelatinized product of the present invention does not require heating for production, it can be easily produced regardless of the presence or absence of a heating source.

### <Details of Coagulated Egg-like Gelatinized Product>

In the present invention, the coagulated egg-like gelatinized product prepared by the production method is prepared by gelation of calcium alginate produced by alginate and calcium ions while taking in water contained in the base material for the gelatinized product.

Therefore, the coagulated egg-like gelatinized product contains calcium alginate and contains components other than alginate contained in the base material for the gelatinized product.

Specifically, the coagulated egg-like gelatinized product contains at least calcium alginate, an edible fat or oil, and a glucide. The coagulated egg-like gelatinized product preferably contains a protein, and more preferably contains a plant protein. In addition, the coagulated egg-like gelatinized product preferably contains an emulsifier, and the emulsifier preferably contains at least one of a hydrophilic emulsifier having an HLB value of 10 or more or a lysophospholipid. In addition, the coagulated egg-like gelatinized product preferably contains common salt.

Furthermore, in the coagulated egg-like gelatinized product, the contents of the edible fat or oil and the glucide are equivalent to the base materials of the gelatinized product. That is, in the coagulated egg-like gelatinized product, the content of the edible fat or oil is 10% or more and 23% or less, and the content of the glucide is 3% or more and 13% or less.

Such a coagulated egg-like gelatinized product can sufficiently reproduce softness, elasticity, and flavor characteristic to coagulated egg.

The coagulated egg-like gelatinized product of the present invention is preferably the coagulated egg-like gelatinized product contained in, for example, scrambled egg soup by taking advantage of such softness, elasticity, and flavor.

### <Food Product Containing Coagulated Egg-like Gelatinized Product>

In the present invention, the coagulated egg-like gelatinized product is a food product like a cooked product containing coagulated egg obtained by coagulating beaten egg. The food product in the present invention preferably contains, in addition to the coagulated egg-like gelatinized product, a calcium solution used for producing the coagulated egg-like gelatinized product as a soup, a seasoning liquid, or the like.

Examples of the food product containing the coagulated egg-like gelatinized product of the present invention include bowls, soups, noodles, cooked breads, stir fries, and other egg cooked products.

Examples of the egg cooked product as a base of the food product containing the coagulated egg-like gelatinized product of the present invention include the following. Examples of the bowl include a chicken and egg bowl, a pork cutlet bowl, an egg bowl, other bowl other eggs, and Tenshinhan. Examples of the soup include a scrambled egg soup. Examples of the noodles include soba noodles with scrambled egg and udon noodles with scrambled egg. Examples of the cooked bread include sandwiches, muffins, hamburgers, and cooked breads sandwiching scrambled eggs or omelets. Examples of the stir fry include fried eggs, stir fries including fried eggs, or the like. Examples of other egg cooked products include scrambled egg, omelet, omelet rice, and crabmeat omelet.

As described above, the food product containing the coagulated egg-like gelatinized product of the present invention is preferably, for example, a food product like a scrambled egg soup. This makes it possible to take advantage of the softness, elasticity, and flavor of the coagulated egg-like gelatinized product, and also makes it possible to use the calcium solution as a soup, and it can be produced in the same manner as real scrambled egg soup.

In the present invention, the scrambled egg soup refers to a soup containing coagulated egg, which is prepared by pouring beaten egg into a soup and heating the beaten egg in the soup, and the flavor of the soup is not limited to a specific one. Examples of the soup as a base of the scrambled egg soup include broth, Chinese soup, and consomme soup.

### <Operation and Effect of Present Invention>

As described above, since the base material for the gelatinized product of the present invention contains alginate, it is possible to produce a coagulated egg-like gelatinized product having elasticity and flavor equivalent to or close to that of a real coagulated egg.

In addition, since the base material for the gelatinized product of the present invention contains 10% or more and 23% or less of the edible fat or oil and 3% or more and 13% or less of the glucide, it is possible to prepare a coagulated egg-like gelatinized product having a soft and smooth texture characteristic to coagulated egg and a rich and slightly sweet flavor.

Furthermore, by adding the base material for the gelatinized product of the present invention to a calcium solution, a coagulated egg-like gelatinized product can be easily prepared. For example, since the base material for the gelatinized product of the present invention does not require breaking eggs, it is possible to save time and effort for cooking. In addition, since the base material for the gelatinized product of the present invention does not require heating for producing the coagulated egg-like gelatinized product, the coagulated egg-like gelatinized product can be easily produced even in a place without a heating source. Therefore, the gelatinized product of the present invention can be used not only as a substitute for liquid egg in cooking at home or in a restaurant, but also as an attached product of a lunch box, a daily dish, or chilled noodles. In addition, since heating is not required, the base material for the gelatinized product of the present invention also has an advantage that the amount of CO₂ emission to the environment can be reduced.

In addition, the base material for the gelatinized product of the present invention can provide a user with an added value such as a feeling of handmaking and a feeling of satisfaction as if the user heats liquid egg, and enjoyment of cooking due to a change in appearance. In addition, the base material for the gelatinized product of the present invention can provide, to users who desire plant food products, the same taste, enjoyment, and satisfaction as those of egg cooked products, and can meet the needs of various users.

Hereinafter, the present invention will be specifically described based on examples and comparative examples. Note that the present invention is not limited thereto.

### Examples

### [Preparation of Gelatinized Product]

First, raw materials having the formulation shown in Table 1 were stirred and mixed to prepare samples of base materials of the gelatinized products of Examples 1 to 13 and Comparative Examples 1 to 3.

Examples 1 to 13 were a sample containing alginate, 10 to 23% of the edible fat or oil, and 3 to 13% of glucide, and Comparative Examples 1 to 3 were a sample not satisfying at least one of these.

As soy milk, pure soy milk (soybean solid content: 8% or more, protein content: 4.2%, lipid content: 3.7%) was used.

As the alginate, sodium alginate was used.

As the edible fat or oil, soybean oil was used.

Table 2 shows the contents of the edible fat or oil, the glucide, water, protein, and alginate in each sample shown in Table 1, and the common salt concentration in the water. The common salt concentration in water was calculated as a ratio of the content of common salt to the water content of each sample.

Specifically, in Examples 1 to 5, a sample in which the blending amount of alginate was changed was used.

In Examples 6 and 7, samples each containing an emulsifier (soybean lysophospholipid or polyglycerin fatty acid ester) were used. The HLB value of the polyglycerin fatty acid ester was 12.

In Examples 8 and 9, samples in which the type of glucide was changed were used.

In Comparative Example 1, a sample containing no glucide was used.

In Examples 10 to 12, a sample in which the blending amount of soy milk (plant protein) was changed was used.

In Comparative Example 2, Example 13, and Comparative Example 3, samples in which the blending ratio between the glucide and the edible fat or oil was changed were used.

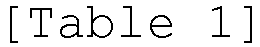

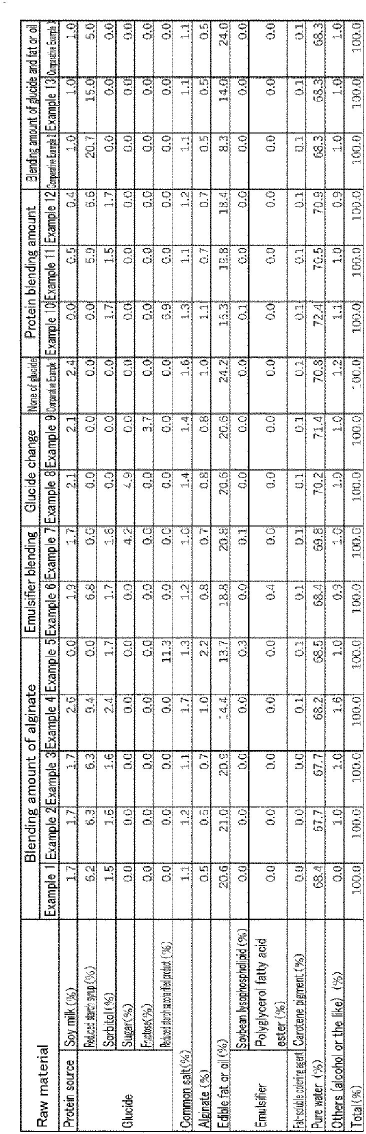

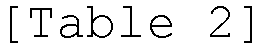

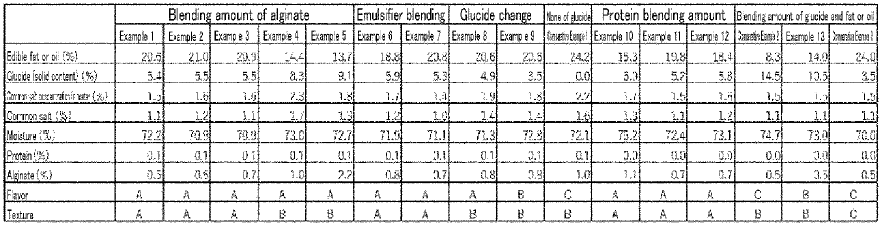

### [Preparation of Coagulated Egg-like Gelatinized Product]

The base materials of the gelatinized products of Examples 1 to 13 and Comparative Examples 1 to 3 were injected little by little into a 3% calcium lactate aqueous solution. In this way, calcium ions were reacted with sodium alginate as a base material for the gelatinized product to prepare a coagulated egg-like gelatinized product.

### [Evaluation of Flavor of Coagulated Egg-like Gelatinized Product]

Three panelists ate a part of the sample of the coagulated egg-like gelatinized product prepared by the base material for the gelatinized product of Examples 1 to 13 and Comparative Examples 1 to 3, and each panelist evaluated the flavor at 0 point to 3 points based on the following criteria. Then, the flavor of each sample was evaluated by A to C based on the average score of the evaluation scores of the three panelists. The results are shown in Table 2.

### (Evaluation Criteria of Panelists)

3 points: It has a flavor equivalent to that of the coagulated egg which is a heated coagulated product of the beaten egg, and is very preferable.
2 points: It has a flavor close to that of the coagulated egg, and is preferable.
1 point: It has a slightly different flavor from the coagulated egg, but has no problem.
0 point: It has a flavor completely different from that of the coagulated egg, which is not preferable.

### (Evaluation Criteria of Flavor)

A: The average score of the evaluation scores of all the panelists is 2 or more.
B: The average score of the evaluation scores of all the panelists is 1 point or more and less than 2 points.
C: The average score of the evaluation scores of all the panelists is less than 1 point.

### [Evaluation Results of Flavor]

As shown in Table 2, in Examples 1 to 13, the flavor was evaluated as A or B, and had a flavor equivalent to or close to that of the coagulated egg. Among them, in each of Examples 1 to 8 and 10 to 12 in which the content of the edible fat or oil was 15% or more and 22% or less and the content of the glucide was 5% or more and 10% or less, richness and sweetness characteristic to eggs were felt, and evaluation A was given.

On the other hand, in Comparative Example 1 in which no glucide was contained, Comparative Example 2 in which the content of the edible fat or oil was 8.3% and the content of the glucide was 14.5%, and Comparative Example 3 in which the content of the edible fat or oil was 24.0% and the content of the glucide was 3.5%, the richness and sweetness of the egg were not felt at all, and evaluation C was given.

### [Evaluation of Texture]

Three panelists ate a part of the sample of the coagulated egg-like gelatinized product prepared by the base material for the gelatinized product of Examples 1 to 13 and Comparative Examples 1 to 3, and each panelist evaluated the texture at 0 point to 3 points based on the following criteria. Then, the texture of each sample was evaluated by A to C based on the average score of the evaluation scores of the three panelists. The results are shown in Table 2.

### (Evaluation Criteria of Panelists)

3 points: Excellent balance of softness and elasticity, equivalent to the coagulated eggs described above, and desirable.
2 points: The balance between softness and elasticity is good, and is considerably close to the coagulated egg, which is preferable.
1 point: Although the balance between softness and elasticity is slightly poor, it is close to the coagulated egg, and there is no problem.
0 point: The texture is completely different from that of the coagulated egg, which is not preferable.

### (Evaluation Criteria of Texture)

A: The average score of the evaluation scores of all the panelists is 2 or more.
B: The average score of the evaluation scores of all the panelists is 1 point or more and less than 2 points.
C: The average score of the evaluation scores of all the panelists is less than 1 point.

### [Evaluation Result of Texture]

As shown in Table 2, in Examples 1 to 13, the flavor was evaluated as A or B, and had a texture equivalent to or close to that of the coagulated egg. Among them, all of Examples 1 to 3, 6 to 7, and 10 to 12 in which the content of the edible fat or oil was 15% or more and 22% or less and the content of the glucide was 5% or more and 10% or less had a good balance of softness and elasticity, and were rated A.

On the other hand, Example 4 in which the content of the edible fat or oil was 14.4%, Example 5 in which the content of the alginate was 2.2%, Example 8 in which the content of the glucide was 4.9%, Example 9 in which the content of the glucide was 3.5%, and Comparative Example 1 in which the glucide was not contained had a slightly harder texture than the coagulated egg, and were evaluated as B.

In Comparative Example 2 in which the content of the edible fat or oil was 8.3% and the content of the glucide was 14.5% and Example 13 in which the content of the edible fat or oil was 14.0% and the content of the glucide was 10.5%, the texture was slightly softer than that of the coagulated egg, and the result was evaluated as B.

Furthermore, in Comparative Example 3 in which the content of the edible fat or oil was 24.0% and the content of the glucide was 3.5%, the oil phase and the aqueous phase (water) were separated, and thus the texture was completely different from that of the coagulated egg, and the result was C evaluation.

### [Preparation of Scrambled Egg Soup-like Food Product]

Into a soup containing 0.5% of calcium lactate and 3% of commercially available chicken bone soup, each of the gelatinized products of Examples 1 to 13 and Comparative Examples 1 to 3 was injected little by little to prepare a food product like a scrambled egg soup. The evaluation of the flavor and texture of the obtained coagulated egg-like gelatinized product like a scrambled egg was equivalent to the results in Table 2.

### [Conclusion]

From the above, it was found that the base material for the gelatinized product of the present invention containing alginate, 10% to 23% of edible fat or oil, and 3% to 13% of glucide can produce the coagulated egg-like gelatinized product having a flavor and texture equivalent to or close to those of a real coagulated egg.

## Claims

1. A base material for a coagulated egg-like gelatinized product, the base material comprising:
an alginate;
an edible fat or oil; and
a glucide, wherein
a content of the edible fat or oil is 10 mass% or more and 23 mass% or less, and
a content of the glucide is 3 mass% or more and 13 mass% or less.

2. The base material for the coagulated egg-like gelatinized product according to claim 1, further comprising a protein.

3. The base material for the coagulated egg-like gelatinized product according to claim 2, wherein
the protein includes a plant protein.

4. The base material for the coagulated egg-like gelatinized product according to any one of claims 1 to 3, further comprising an emulsifier.

5. The base material for the coagulated egg-like gelatinized product according to claim 4, wherein
the emulsifier contains at least one of a hydrophilic emulsifier having an HLB value of 10 or more or a lysophospholipid.

6. The base material for the coagulated egg-like gelatinized product according to any one of claims 1 to 5, further comprising common salt, wherein
a common salt concentration in water is 0.5 mass% or more and 5 mass% or less.

7. A method for producing a coagulated egg-like gelatinized product, the method comprising:
adding a base material for a coagulated egg-like gelatinized product containing an alginate, an edible fat or oil, and a glucide to a calcium solution, wherein
a content of the edible fat or oil is 10 mass% or more and 23 mass% or less, and
a content of the glucide is 3 mass% or more and 13 mass% or less.

8. A coagulated egg-like gelatinized product comprising:
a calcium alginate;
an edible fat or oil; and
a glucide, wherein
a content of the edible fat or oil is 10 mass% or more and 23 mass% or less, and
a content of the glucide is 3 mass% or more and 13 mass% or less.

9. A food product comprising:
the coagulated egg-like gelatinized product according to claim 8.

10. The food product according to claim 9, wherein
the food product is like a scrambled egg soup.
